# FASCICULE DE BREVET EUROPEEN

(11) **EP 0 706 029 B1**
(45) Date de publication et mention de la délivrance du brevet: **15.12.1999**
(21) Numéro de dépôt: 95402186.1
(22) Date de dépôt: 29.09.1995
(51) Int. Cl.: G01C 19/28

(54) **Système gyroscopique pour missile en autorotation**
Kreiselsystem für Drallgeschoss
Gyroscopic system for a spinning missile

(30) Priorité: 05.10.1994 FR 9411890
(43) Date de publication de la demande: 10.04.1996
(73) Titulaire: AEROSPATIALE SOCIETE NATIONALE INDUSTRIELLE, 75016 Paris (FR)
(72) Inventeur: Moutardier, Jacques, F-92350 Le Plessis Robinson (FR)
(74) Mandataire: Bonnetat, Christian

(56) Documents cités:
- EP-A- 0 068 914
- EP-A- 0 485 264
- EP-A- 0 521 757
- US-A- 5 138 154

## Description

La présente invention concerne un système gyroscopique pour missile en autorotation, grâce auquel on peut mesurer l'inclinaison du plan défini par les axes de rotation des cadres primaire et secondaire par rapport à l'axe de rotation de la toupie.

On rappelle qu'un tel système gyroscopique est un équipement de missiles notamment, qui, d'une part, doit conserver son aptitude à fonctionner pendant la phase logistique et tactique et, d'autre part, doit fournir la référence inertielle en roulis et lacet (ou tangage) du missile pendant la phase de départ. Les informations provenant des détecteurs de roulis et de lacet permettent de conserver la position initiale du missile comme référence et sont transmises à l'élaborateur d'ordre de guidage. Ces informations sont ensuite utilisées pour le guidage et le pilotage du missile pendant environ 1 seconde.

Par le brevet EP-0 485 264, on connaît déjà un système gyroscopique, comprenant :
- une toupie ayant un centre et susceptible d'être entraînée en rotation autour d'un premier axe passant par ledit centre ;
- un cadre primaire sur lequel la toupie est montée de façon à pouvoir tourner autour dudit premier axe ;
- un cadre secondaire sur lequel ledit cadre primaire est monté de façon à pouvoir tourner autour d'un deuxième axe passant par ledit centre de la toupie et perpendiculaire audit premier axe ;
- un boîtier, à l'intérieur duquel sont logés ladite toupie et lesdits cadres primaire et secondaire et sur lequel ledit cadre secondaire est monté de façon à pouvoir tourner autour d'un troisième axe, passant par ledit centre de la toupie et perpendiculaire audit deuxième axe ;
- des moyens de marquage formés par des zones de réflectivités différentes et représentatifs de l'inclinaison du plan défini par lesdits deuxième et troisième axes de rotation desdits cadres primaire et secondaire par rapport audit premier axe de rotation de ladite toupie ;
- des moyens de détection desdits moyens de marquage, portés par ledit boîtier ; et
- des moyens d'exploitation des informations fournies par lesdits moyens de détection.

Plus précisément, dans le cas du système gyroscopique du brevet EP-O 485 264, les moyens de marquage sont prévus sur une portion sphérique de la surface extérieure de la toupie au voisinage du plan défini par les axes de rotation des cadres primaire et secondaire. Si un tel système permet d'atteindre une forte résolution et une précision élevée de fonctionnement, l'emploi en est relativement délicat de ce fait même et du fait que, dans ce cas, le détecteur, associé aux moyens de marquage, doit traverser les articulations des cadres primaire et secondaire.

Une telle complexité ne se justifie pas toujours, notamment pour des missiles en autorotation, dont le temps d'utilisation est réduit, comme des missiles anti-chars à très courte portée.

La présente invention a pour but d'éviter ces inconvénients et concerne un système gyroscopique de réalisation plus "rustique", tout en conservant une efficacité tout à fait acceptable, notamment dans le contexte ci-dessus indiqué.

A cet effet, le système gyroscopique pour missile en autorotation, du type décrit ci-dessus, est caractérisé, selon l'invention, en ce que lesdits moyens de marquage sont formés par au moins un ensemble de traits parallèles de longueurs différentes, portés sur la surface extérieure d'au moins une portion sphérique dudit cadre primaire, centrée sur ledit centre.

Ainsi, cet agencement permet de résoudre les problèmes de détection évoqués plus haut dans la mesure où, d'une part, le détecteur n'a pas à traverser les cadres primaire et secondaire et où, d'autre part, la vitesse relative du boîtier (missile) par rapport au cadre primaire est bien plus faible que la vitesse de rotation de la toupie, et les moyens de marquage (zones de réflectivités différentes) réalisés sur le cadre primaire peuvent être plus larges que sur la toupie. De plus, la réalisation des moyens de marquage est facilitée par le fait que le cadre primaire est fabriqué en alliage léger, alors que la toupie est en acier.

On remarquera que le document US-A-5 138 154 décrit un codeur angulaire destiné à un gyroscope à main, dans lequel des moyens de marquage sont prévus sur la surface extérieure du cadre primaire, alors que les moyens de détection de ces moyens de marquage sont portés par un cadre non rotatif.

Selon une autre caractéristique de l'invention, ladite portion sphérique dudit cadre primaire présente une forme générale triangulaire et fait saillie de la bague annulaire, constituant ledit cadre proprement dit, dans le prolongement de sa surface périphérique externe.

Avantageusement, deux dites portions sphériques sont prévues sur ladite bague, en étant disposées de façon angulairement espacée de 180° et en regard l'une de l'autre.

Selon encore une autre caractéristique de l'invention, ledit ensemble de traits parallèles comporte au moins une partie dans laquelle la longueur desdits traits est successivement croissante et au moins une partie dans laquelle la longueur desdits traits est successivement décroissante.

De préférence, ledit ensemble de traits est disposé de façon que celui desdits traits qui est le plus long permet de déterminer une position de référence lorsque le plan défini par les axes de rotation des cadres primaire et secondaire est perpendiculaire à l'axe de rotation de la toupie.

Selon d'autres caractéristiques de l'invention, lesdits traits parallèles portés par ladite surface extérieure sphérique sont équidistants et, par ailleurs, l'augmentation ou la diminution de longueur d'un trait par rapport au précédent est constante.

A côté d'un agencement symétrique comme expliqué par la suite, lesdits traits parallèles peuvent être disposés en quinconce sur ladite portion sphérique de forme générale triangulaire, relativement aux extrémités desdits traits débouchant sur les côtés du triangle.

Avantageusement, lesdits moyens de détection comprennent des moyens d'éclairement, solidaires dudit boîtier, prévus pour former une tache lumineuse sur ladite surface extérieure sphérique, et des moyens photosensibles, solidaires dudit boîtier, prévus pour observer ladite tache lumineuse formée par lesdits moyens d'éclairement, et lesdits moyens d'exploitation comportent des moyens de comptage, associés auxdits moyens photosensibles, pour compter le nombre des traits dudit ensemble observés par lesdits moyens photosensibles au cours de la rotation dudit boîtier par rapport audit cadre primaire, liée à l'autorotation du missile.

De plus, selon une application avantageuse, le système gyroscopique selon l'invention est destiné à détecter la position angulaire de l'axe de lacet ou de l'axe de tangage dudit missile par rapport à la verticale. A cet effet, ledit boîtier est fixé sur ledit missile de façon que ledit troisième axe de rotation du cadre secondaire par rapport audit boîtier soit confondu avec l'axe de roulis dudit missile.

Les figures du dessin annexé feront bien comprendre comment l'invention peut être réalisée.

La figure 1 montre un mode de réalisation du système gyroscopique selon l'invention, suivant un plan de coupe passant par l'axe de rotation de la toupie et par l'axe de rotation du cadre secondaire.

La figure 2 est une vue en perspective schématique du cadre primaire du système gyroscopique selon l'invention.

La figure 3 est une vue de face du cadre primaire de la figure 2.

La figure 4 est une vue de dessus d'une portion sphérique du cadre primaire des figures 2 et 3, illustrant de plus le principe de détection selon l'invention.

La figure 5 est une vue semblable à la figure 4 montrant une variante de l'agencement des traits de marquage selon l'invention.

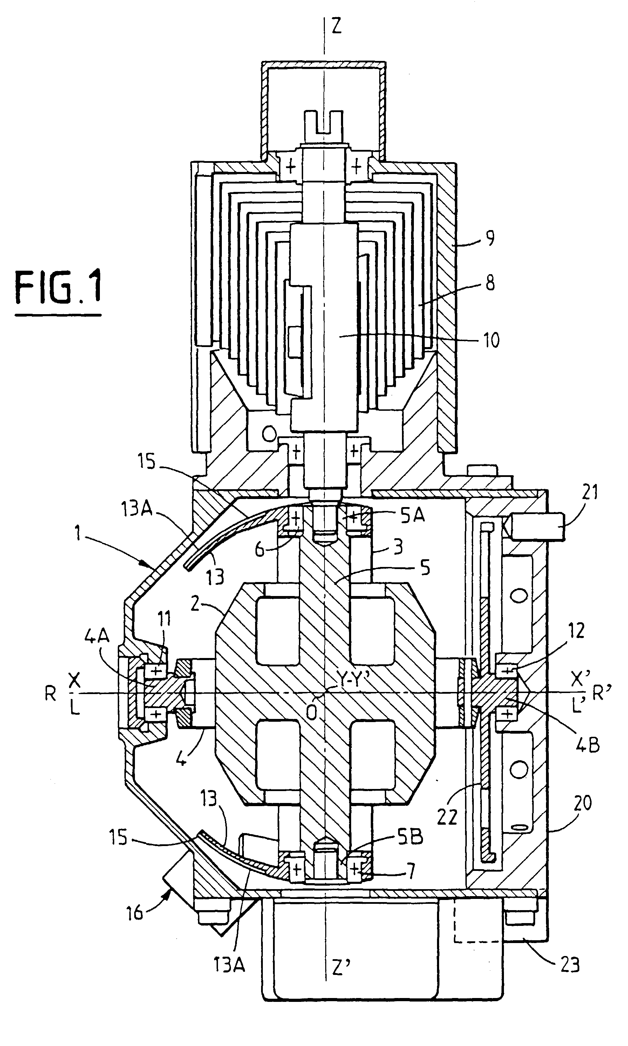

L'exemple de réalisation du système gyroscopique conforme à la présente invention, montré par la figure 1, comporte un boîtier 1 d'axe longitudinal L-L', à l'intérieur duquel sont montés une toupie 2, un cadre primaire 3 et un cadre secondaire 4.

La toupie 2, dont le centre est désigné par O, est solidaire en rotation avec un arbre 5, d'axe Z-Z' destiné à fournir une référence de verticale. Les extrémités 5A et 5B de l'arbre 5 sont reliées au cadre primaire 3 par l'intermédiaire de roulements, respectivement 6 et 7. Par ailleurs, la mise en rotation de la toupie 2 est provoquée, dans ce cas, par un ressort à lame spiralée 8, logé dans un boîtier 9 à l'extérieur du boîtier 1 et destiné à entraîner en rotation un arbre 10 solidaire, de façon débrayable, de l'arbre 5. Un tel dispositif est décrit en détail dans le brevet EP-0 489 613 auquel on se rapportera pour tout détail supplémentaire concernant ce dispositif.

Le cadre secondaire 4 comporte des premiers moyeux opposés (non visibles sur la figure 1), coopérant avec des roulements (également non visibles) solidaires du cadre primaire 3. Ainsi, le cadre primaire 3 peut pivoter, par rapport au cadre secondaire 4, autour d'un axe Y-Y' rencontrant l'axe Z-Z' au centre O. En outre, l'axe Y-Y' est perpendiculaire à l'axe Z-Z'.

De plus, le cadre secondaire 4 comporte des seconds moyeux opposés 4A et 4B, coopérant respectivement avec des roulements 11 et 12 reliés au boîtier 1. Les seconds moyeux 4A et 4B et les roulements 11 et 12 définissent, pour le cadre secondaire 4, un axe de rotation X-X' par rapport au boîtier 1. L'axe X-X' passe par le centre O et il est perpendiculaire à chacun des axes Z-Z' et Y-Y'.

Il est prévu, par ailleurs, des moyens de marquage qui sont représentatifs de l'inclinaison du plan défini par les axes de rotation Y-Y' et X-X' des cadres primaire 3 et secondaire 4 par rapport à l'axe de rotation Z-Z' de la toupie 2. Selon l'invention, ces moyens de marquage sont portés sur la surface extérieure 13A de deux portions sphériques 13 du cadre primaire 3, centrées sur le centre O.

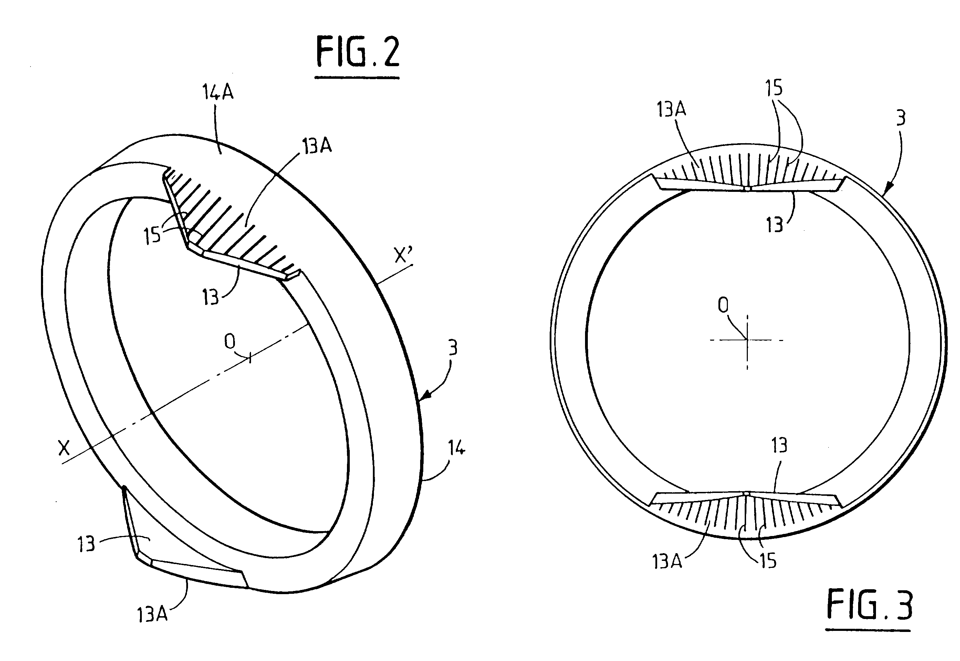

Comme on le voit mieux sur les figures 2 et 3, chaque portion sphérique 13 du cadre primaire 3 présente une forme générale triangulaire et fait saillie de la bague annulaire 14, constituant le cadre primaire proprement dit, dans le prolongement de sa surface périphérique externe 14A. Comme montré sur les figures 2 et 3, les deux portions sphériques 13 sont prévues sur la bague 14, en étant disposées de façon angulairement espacée de 180° et en regard l'une de l'autre. De plus, sur ces mêmes figures 2 et 3, on voit que lesdits moyens de marquage sont formés, sur chaque portion sphérique 13, par un ensemble de traits parallèles 15 de longueurs différentes, s'étendant depuis la base du "triangle" constitué par la portion sphérique 13 jusqu'aux côtés opposés à cette base. Ainsi, les traits 15 s'étendent au moins sensiblement perpendiculairement au plan défini par l'axe de rotation Z-Z' de la toupie 2 et l'axe de rotation Y-Y' du cadre primaire 3. Dans ce contexte, le terme "trait" désigne une zone de réflectivité différente sur la surface 13A et peut être une fente, rainure ou gravure à fond noirci (ou un trait dans son sens usuel) réalisée sur ladite surface.

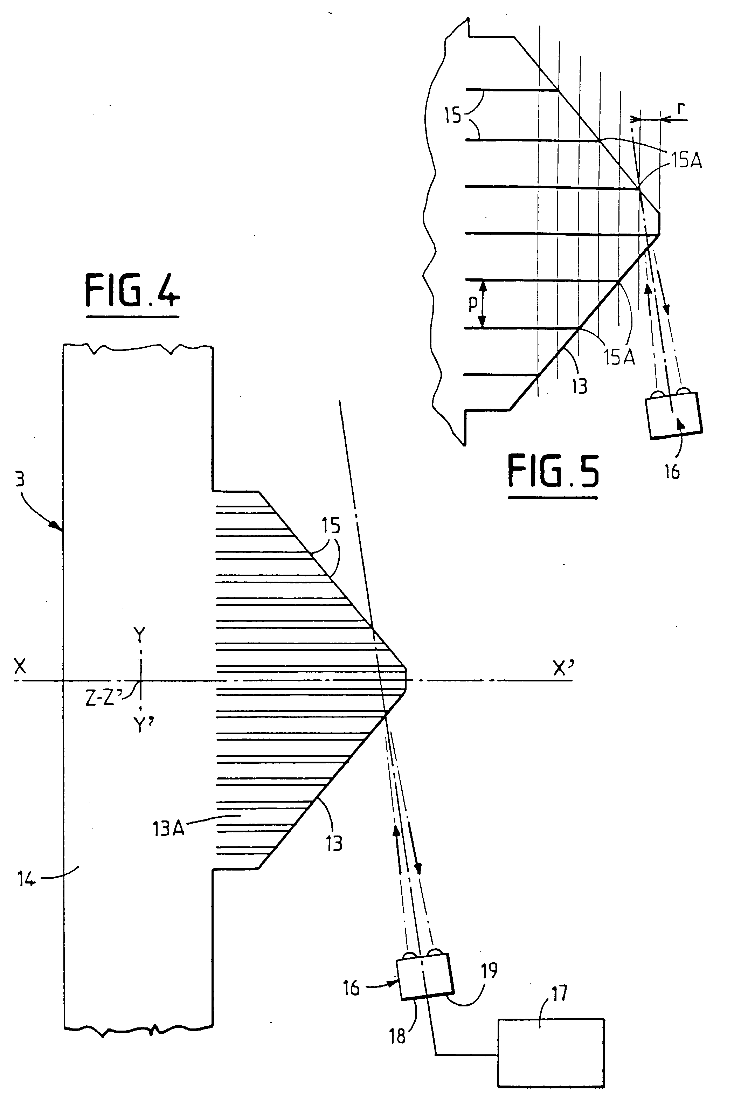

En outre, comme cela est clair en regard des figures 2 à 4, l'ensemble de traits parallèles 15 comporte au moins une partie dans laquelle la longueur des traits 15 est successivement croissante et au moins une partie dans laquelle la longueur des traits 15 est successivement décroissante. De plus, l'ensemble des traits 15 est disposé de façon que celui (ou ceux, comme sur la figure 4) desdits traits qui est le plus long permet de déterminer une position de référence lorsque le plan défini par les axes de rotation Y-Y' et X-X' des cadres primaire 3 et secondaire 4 est perpendiculaire à l'axe de rotation Z-Z' de la toupie 2. Par ailleurs, lesdits traits 15 sont avantageusement équidistants et l'augmentation et la diminution de longueur d'un trait par rapport au précédent sont constantes. Le nombre des traits 15 peut être quelconque selon la résolution souhaitée (le nombre de traits, une vingtaine, représentés sur les figures ne doit être considéré qu'à titre indicatif).

La figure 5 montre une variante de l'agencement des traits 15 de marquage, disposés dans ce cas en "quinconce", relativement aux extrémités 15A desdits traits débouchant sur les côtés du "triangle" 13 opposés à la base, et non de façon symétrique par rapport à l'axe X-X', comme sur la figure 4. Cet agencement permet d'obtenir un pas p plus grand des traits pour faciliter la fabrication et optimiser la résolution r.

En outre, des moyens de détection 16 des moyens de marquage 15 sont prévus, ainsi que des moyens d'exploitation 17 (figure 4) des informations fournies par les moyens de détection 16. Plus précisément, les moyens de détection 16, montés sur le boîtier 1 en face d'une fenêtre de celui-ci et en regard des portions sphériques 13 du cadre primaire 3, comme on le voit sur la figure 1, comprennent des moyens d'éclairement 18, prévus pour former une tache lumineuse sur la surface sphérique 13A, et des moyens photosensibles 19, prévus pour observer la tache lumineuse formée par les moyens d'éclairement. Les moyens d'exploitation 17 comportent des moyens de comptage, associés aux moyens photosensibles 19, pour compter le nombre des traits dudit ensemble observés par les moyens photosensibles au cours de la rotation du boîtier 1 par rapport au cadre primaire 3, liée à l'autorotation du missile.

Ainsi, selon que l'axe longitudinal L-L' du boîtier 1 est confondu avec l'axe X-X' du cadre secondaire 4, ou que le boîtier 1 pivote autour de l'axe Y-Y', dans le sens des aiguilles d'une montre ou dans le sens inverse, le nombre des traits comptés sera différent, en étant représentatif de l'amplitude angulaire du pivotement du boîtier 1 autour de l'axe Y-Y'. Cette manière de procéder est décrite en détail dans le brevet EP-0 485 264.

Dans une application du système gyroscopique de l'invention, le boîtier 1 est fixé, par sa face 20 et grâce à des pions de centrage 21, sur un missile (non représenté), de façon que l'axe L-L' du boîtier soit confondu avec l'axe de roulis R-R' du missile. Dans ce cas, les moyens d'exploitation 17 fourniront, en sortie, l'inclinaison de l'axe de lacet du missile par rapport à l'axe Z-Z' de la toupie. En effet, cet axe de lacet est alors perpendiculaire au plan X-X', Y-Y'.

Bien entendu, de façon analogue, le système gyroscopique de l'invention pourrait s'appliquer à la surveillance de l'axe de tangage.

Pour pouvoir de plus mesurer le roulis du missile, on peut prévoir une roue de détection 22, en regard d'un détecteur 23, solidaire du cadre secondaire 4 et coaxiale à l'axe X-X'.

Lors de la séquence de tir, une impulsion électrique est envoyée à l'inflammateur pyrotechnique du gyroscope. Cette impulsion déclenche le dispositif de mise en vitesse de la toupie et le déverrouillage des cadres. Le système gyroscopique est alors opérationnel (40 ms après sa mise à feu). Les détecteurs de roulis et de lacet (ou tangage) délivrent les informations obtenues, dans le dernier cas par réflexion sur les zones de réflectivités différentes. En particulier, la détection en lacet permet de mesurer l'attitude en direction en délivrant des signaux électriques engendrés par un code (ensemble de traits) gravé directement sur le cadre primaire.

A titre d'exemple, on indiquera ci-après quelques données numériques concernant le système gyroscopique selon l'invention :
- masse ≤ 210 g
- roulis : dérive ≤ 1°/s (3 signaux par tour du missile)
- lacet : dérive ≤ 1°/s (résolution 0,6° à 1° ; étendue de mesure ≥ ± 10°)
- débattement du cadre primaire ≥ 40°
- débattement du cadre secondaire : 360°.

## Revendications

1. Système gyroscopique pour missile en autorotation, comprenant :
- une toupie ayant un centre et susceptible d'être entraînée en rotation autour d'un premier axe passant par ledit centre ;
- un cadre primaire sur lequel ladite toupie est montée de façon à pouvoir tourner autour dudit premier axe ;
- un cadre secondaire sur lequel ledit cadre primaire est monté de façon à pouvoir tourner autour d'un deuxième axe passant par ledit centre de la toupie et perpendiculaire audit premier axe ;
- un boîtier, à l'intérieur duquel sont logés ladite toupie et lesdits cadres primaire et secondaire et sur lequel ledit cadre secondaire est monté de façon à pouvoir tourner autour d'un troisième axe, passant par ledit centre de la toupie et perpendiculaire audit deuxième axe ;
- des moyens de marquage formés par des zones de réflectivités différentes et représentatifs de l'inclinaison du plan défini par lesdits deuxième et troisième axes de rotation desdits cadres primaire et secondaire par rapport audit premier axe de rotation de ladite toupie ;
- des moyens de détection desdits moyens de marquage, portés par ledit boîtier ; et
- des moyens d'exploitation des informations fournies par lesdits moyens de détection,
caractérisé en ce que lesdits moyens de marquage (15) sont formés par au moins un ensemble de traits parallèles (15) de longueurs différentes, portés sur la surface extérieure (13A) d'au moins une portion sphérique (13) dudit cadre primaire (3), centrée sur ledit centre (O).

2. Système gyroscopique selon la revendication 1,
caractérisé en ce que ladite portion sphérique (13) dudit cadre primaire (3) présente une forme générale triangulaire et fait saillie de la bague annulaire (14), constituant ledit cadre proprement dit, dans le prolongement de sa surface périphérique externe (14A).

3. Système gyroscopique selon la revendication 2,
caractérisé en ce que deux dites portions sphériques (13) sont prévues sur ladite bague (14), en étant disposées de façon angulairement espacée de 180° et en regard l'une de l'autre.

4. Système gyroscopique selon l'une quelconque des revendications 1 à 3,
caractérisé en ce que ledit ensemble de traits parallèles (15) comporte au moins une partie dans laquelle la longueur desdits traits est successivement croissante et au moins une partie dans laquelle la longueur desdits traits est successivement décroissante.

5. Système gyroscopique selon la revendication 4,
caractérisé en ce que ledit ensemble de traits (15) est disposé de façon que celui desdits traits qui est le plus long permet de déterminer une position de référence lorsque le plan défini par les axes de rotation (Y-Y', X-X') des cadres primaire (3) et secondaire (4) est perpendiculaire à l'axe de rotation (Z-Z') de la toupie (2).

6. Système gyroscopique selon l'une quelconque des revendications 1 à 5,
caractérisé en ce que lesdits traits parallèles (15) portés par ladite surface extérieure sphérique (13A) sont équidistants.

7. Système gyroscopique selon la revendication 6,
caractérisé en ce que l'augmentation de longueur d'un trait par rapport au précédent est constante.

8. Système gyroscopique selon la revendication 6,
caractérisé en ce que la diminution de longueur d'un trait par rapport au précédent est constante.

9. Système gyroscopique selon l'une quelconque des revendications 2 à 8,
caractérisé en ce que lesdits traits parallèles (15) sont disposés en quinconce sur ladite portion sphérique (13) de forme générale triangulaire, relativement aux extrémités (15A) desdits traits débouchant sur les côtés du triangle (13).

10. Système gyroscopique selon l'une quelconque des revendications 1 à 9 ,
caractérisé en ce que lesdits moyens de détection comprennent des moyens d'éclairement (18), solidaires dudit boîtier (1), prévus pour former une tache lumineuse sur ladite surface extérieure sphérique (13A), et des moyens photosensibles (19), solidaires dudit boîtier (1), prévus pour observer ladite tache lumineuse formée par lesdits moyens d'éclairement (18), et en ce que lesdits moyens d'exploitation (17) comportent des moyens de comptage, associés auxdits moyens photosensibles (19), pour compter le nombre des traits dudit ensemble observés par lesdits moyens photosensibles au cours de la rotation dudit boîtier par rapport audit cadre primaire, liée à l'autorotation du missile.

11. Système gyroscopique selon l'une quelconque des revendications 1 à 10, destiné à détecter la position angulaire de l'axe de lacet ou de l'axe de tangage dudit missile par rapport à la verticale,
caractérisé en ce que ledit boîtier (1) est fixé sur ledit missile de façon que ledit troisième axe de rotation (X-X') du cadre secondaire (4) par rapport audit boîtier (1) soit confondu avec l'axe de roulis (R-R') dudit missile.

## Patentansprüche

1. Kreiselsystem für selbstdrehende Flugkörper, das folgendes umfaßt:
- einen Kreisel, der einen Mittelpunkt besitzt und um eine erste, durch diesen Mittelpunkt verlaufende Achse in Drehung versetzt werden kann;
- einen Hauptrahmen, an dem der genannte Kreisel so montiert ist, daß er sich um die genannte erste Achse drehen kann,
- einen Nebenrahmen, an den der genannte Hauptrahmen so montiert ist, daß er sich um eine zweite, durch den genannten Mittelpunkt des Kreisels und senkrecht zur genannten ersten Achse verlaufende Achse drehen kann;
- ein Gehäuse, in dessen Inneren der genannte Kreisel und der genannte Haupt- und der genannte Nebenrahmen untergebracht sind und auf dem der genannte Nebenrahmen so montiert ist, daß er sich um eine dritte Achse drehen kann, die durch den genannten Mittelpunkt des Kreisels und senkrecht zur genannten zweiten Achse verläuft;
- Mittel zur Kennzeichnung, die durch Bereiche mit unterschiedlichem Reflexionsvermögen gebildet werden und repräsentativ sind für die Neigung der Ebene, die definiert wird durch die genannte zweite und dritte Achse im Verhältnis zur genannten ersten Drehachse des genannten Kreisels;
- auf dem genannten Gehäuse befindliche Erfassungsvorrichtungen für die genannten Kennzeichnungsmittel; und
- Mittel zur Verarbeitung der von den genannten Erfassungsmitteln gelieferten Daten,
dadurch gekennzeichnet, daß die genannten Kennzeichnungsmittel (15) von mindestens einer Gruppe von parallelen Strichen (15) mit unterschiedlicher Länge gebildet werden, die auf die Außenfläche (13A) von mindestens einem kugelförmigen Teil (13) des genannten Hauptrahmens (3) aufgebracht sind, wobei dieser Teil auf den genannten Mittelpunkt (0) ausgerichtet ist.

2. Kreiselsystem nach Anspruch 1,
dadurch gekennzeichnet, daß der genannte kugelförmige Teil (13) des genannten Hauptrahmens (3) eine dreieckige Grundform aufweist und aus dem den genannten eigentlichen Rahmen bildenden ringförmigen Reifen (14) in der Verlängerung seiner äußeren Umfangsfläche (14A) herausragt.

3. Kreiselsystem nach Anspruch 2,
dadurch gekennzeichnet, daß zwei genannte kugelförmige Teile (13) auf dem genannten Reifen (14) vorgesehen sind, wobei sie in einem Winkelabstand von 180° zueinander und einander gegenüber angeordnet sind.

4. Kreiselsystem nach irgendeinem der Ansprüche 1 bis 3, dadurch gekennzeichnet, daß die genannte Gruppe von parallelen Strichen (15) mindestens einen Teil, in dem die Länge der genannten Striche allmählich zunimmt, und einen Teil, in dem die Länge der genannten Striche allmählich geringer wird, umfaßt.

5. Kreiselsystem nach Anspruch 4,
dadurch gekennzeichnet, daß die Strichgruppe (15) so angeordnet ist, daß der längste der genannten Striche es gestattet, eine Bezugsposition zu ermitteln, wenn die von den Drehachsen (Y-Y', X-X') des Hauptrahmens (3) und des Nebenrahmens (4) definierte Ebene rechtwinklig zur Drehachse (Z-Z') des Kreisels (2) verläuft.

6. Kreiselsystem nach irgendeinem der Ansprüche 1 bis 5,
dadurch gekennzeichnet, daß die genannten parallelen Striche (15), die sich auf der genannten Kugelaußenfläche (13A) befinden, in gleichem Abstand zueinander angeordnet sind.

7. Kreiselsystem nach Anspruch 6,
dadurch gekennzeichnet, daß die Längenzunahme eines Striches im Verhältnis zu vorherigen konstant ist.

8. Kreiselsystem nach Anspruch 6,
dadurch gekennzeichnet, daß die Längenabnahme eines Striches im Verhältnis zum vorherigen konstant ist.

9. Kreiselsystem nach irgendeinem der Ansprüche 2 bis 8,
dadurch gekennzeichnet, daß die genannten parallelen Striche (15) auf dem genannten Kugelteil (13) mit dreieckiger Grundform in bezug auf die Enden (15A) der genannten Striche, die an den Seiten des Dreiecks enden, versetzt angeordnet sind.

10. Kreiselsystem nach irgendeinem der Ansprüche 1 bis 9,
dadurch gekennzeichnet, daß die genannten Erfassungsvorrichtungen Mittel zur Beleuchtung (18) umfassen, die fest mit dem genannten Gehäuse (1) verbunden sind und einen Lichtfleck auf der genannten Kugelaußenfläche (13A) bilden sollen, sowie fest mit dem genannten Gehäuse (1) verbundene, lichtempfindliche Vorrichtungen (19), die den von den genannten Beleuchtungsmitteln (18) gebildeten Lichtfleck beobachten sollen, und daß die genannten Verarbeitungsvorrichtungen (17) den genannten lichtempfindlichen Vorrichtungen (19) zugeordnete Zählvorrichtungen zum Zählen der Zahl der Striche der genannten Gruppe umfassen, die von den genannten lichtempfindlichen Vorrichtungen während der mit der Eigendrehung des Flugkörpers verbundenen Rotation des genannten Gehäuses im Verhältnis zum genannten Hauptrahmen beobachtet werden.

11. Kreiselsystem nach irgendeinem der Ansprüche 1 bis 10 zur Ermittlung der Winkelposition der Gierachse oder der Nickachse des genannten Flugkörpers im Verhältnis zur Senkrechten,
dadurch gekennzeichnet, daß das genannte Gehäuse (1) auf dem genannten Flugkörper so befestigt ist, daß die genannte dritte Drehachse (X-X') des Nebenrahmens (4) im Verhältnis zum genannten Gehäuse (1) mit der Längsachse (R-R') des genannten Flugkörpers koinzidiert.

## Claims

1. Gyroscopic system for an autorotating missile, comprising:
- a top having a centre and able to be driven in rotation about a first axis passing through the said centre;
- a primary frame on which the said top is mounted in such a way as to be able to spin about the said first axis;
- a secondary frame on which the said primary frame is mounted in such a way as to be able to spin about a second axis passing through the said centre of the top and perpendicular to the said first axis;
- a housing, inside which are accommodated the said top and the said primary and secondary frames and on which the said secondary frame is mounted in such a way as to be able to spin about a third axis, passing through the said centre of the top and perpendicular to the said second axis;
- marking means formed by zones of different reflectivities and representative of the inclination of the plane defined by the said second and third axes of rotation of the said primary and secondary frames with respect to the said first axis of rotation of the said top;
- means of detecting the said marking means, carried by the said housing; and
- means of utilizing the information provided by the said detection means,
characterized in that the said marking means (15) are formed by at least one set of parallel lines (15) of different lengths, carried on the outer surface (13A) of at least one spherical portion (13) of the said primary frame (3), which portion is centred on the said centre (O).

2. Gyroscopic system according to Claim 1,
characterized in that the said spherical portion (13) of the said primary frame (3) has a triangular general shape and projects from the annular ring (14), constituting the said frame proper, in extended alignment with its external peripheral surface (14A).

3. Gyroscopic system according to Claim 2,
characterized in that two so-called spherical portions (13) are provided on the said ring (14), while being disposed such as to be angularly spaced by 180° and facing one another.

4. Gyroscopic system according to any one of Claims 1 to 3,
characterized in that the said set of parallel lines (15) comprises at least one part in which the length of the said lines is successively increasing and at least one part in which the length of the said lines is successively decreasing.

5. Gyroscopic system according to Claim 4,
characterized in that the said set of lines (15) is disposed in such a way that that one of the said lines which is the longest makes it possible to determine a reference position when the plane defined by the axes of rotation (Y-Y', X-X') of the primary (3) and secondary (4) frames is perpendicular to the axis of rotation (Z-Z') of the top (2).

6. Gyroscopic system according to any one of Claims 1 to 5,
characterized in that the said parallel lines (15) carried by the said spherical outer surface (13A) are equidistant.

7. Gyroscopic system according to Claim 6,
characterized in that the increase in length of a line with respect to the previous one is constant.

8. Gyroscopic system according to Claim 6,
characterized in that the decrease in length of a line with respect to the previous one is constant.

9. Gyroscopic system according to any one of Claims 2 to 8,
characterized in that the said parallel lines (15) are disposed in a quincunx layout on the said spherical portion (13) of triangular general shape, relative to the ends (15A) of the said lines emerging on the sides of the triangle (13).

10. Gyroscopic system according to any one of Claims 1 to 9,
characterized in that the said detection means comprise illumination means (18) integral with the said housing (1) and provided so as to form a luminous spot on the said spherical outer surface (13A), and photosensitive means (19) integral with the said housing (1) and provided so as to observe the said luminous spot formed by the said illumination means (18), and in that the said utilizing means (17) comprise counting means associated with the said photosensitive means (19) for counting the number of lines of the said set which are observed by the said photosensitive means in the course of the rotation of the said housing with respect to the said primary frame, which rotation is related to the autorotation of the missile.

11. Gyroscopic system according to any one of Claims 1 to 10, intended for detecting the angular position of the yaw axis or pitch axis of the said missile with respect to the vertical,
characterized in that the said housing (1) is fixed on the said missile in such a way that the said third axis of rotation (X-X') of the secondary frame (4) with respect to the said housing (1) coincides with the axis of roll (R-R') of the said missile.
